(19) **Europäisches Patentamt**

**European Patent Office**

**Office européen des brevets**

(11) **EP 1 090 695 A1**

(12) **EUROPEAN PATENT APPLICATION**

(43) Date of publication:
**11.04.2001 Bulletin 2001/15**

(51) Int. Cl.⁷: **B09C 1/08**, B09C 1/02,
C22B 43/00, A62D 3/00

(21) Application number: **00201279.7**

(22) Date of filing: **10.04.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **08.10.1999 GB 9923879**

(71) Applicants:
• **K.U. LEUVEN RESEARCH & DEVELOPMENT
3000 Leuven (BE)**
• **Metalogic N.V.
3001 Heverlee (BE)**

(72) Inventors:
• **Verdonckt, Francies
3370 Boutersem (BE)**
• **Maes, André
3360 Korbeek-Lo (BE)**

(74) Representative:
**Bird, William Edward et al
Bird Goen & Co.,
Termerestraat 1
3020 Winksele (BE)**

(54) **Process and apparatus for recovering heavy metals from contaminated materials**

(57) A process for recovering mercury from a mercury-contaminated material, comprising a step making use of a lixiviating system comprising iodide, iodate and tri-iodide ions in an effective amount in order to desorb and complex mercury from the said material.

The process may be performed in apparatus for recovering a heavy metal from a heavy metal-contaminated material, having:

- a cathode compartment (1) comprising a cathode (2) and an ion-permeable housing (3) for containing a cathode solution (4),
- an anode compartment (5) comprising an anode (6) and an ion-permeable housing (7) for containing an anode solution (8),
- a cathode recipient (9) for supplying the cathode solution to the cathode compartment (1),
- an anode recipient (10) for supplying the anode solution to the anode compartment (5),
- a device for isolating, from the anode solution (8), a set of ions electrokinetically transported from the cathode solution (4) and a heavy metal complex electrokinetically transported from the heavy metal-contaminated soil, and
- a device for recycling the ions isolated from the anode solution (8) back to the cathode solution (4).

EP 1 090 695 A1

**Description**

This invention relates to the recovery of heavy metals, in particular mercury, from heavy metal-contaminated materials such as industrial wastes, ground soil, sand, gravel, building materials and the like. More specifically, the present invention relates to an environmentally safe *in situ* process for such recovery and to an apparatus for performing the said process.

BACKGROUND OF THE INVENTION

In recent years, ground soil and other materials polluted with heavy metals such as mercury have become a serious environmental problem. This is namely because the toxicity of mercury is intensified when it forms compounds which concentrate and remain in fatty tissues. Once ground soil and other materials have been contaminated by mercury, they are difficult to clean it up because mercury can remain either on its elemental form or in the form of various compounds and species (either anionic or cationic), the solubility of which in both aqueous and organic solvents varies from extremely soluble to extremely insoluble.

When present in ground soil or other materials, mercury and its compounds are bound quite tightly to the organic portion of soil, consequently leaching slowly into ground waters and thereby spreading the contamination to the water supply. In order to try solving this problem, various techniques for the removal of mercury were developed. In particular some techniques are based on the knowledge that chloride containing salts, synthetic and natural chelating agents and certain oxidants increase the mobility of mercury in soil. However, mobility of a mercury contaminant requires a high extraction efficiency in order to constitute an effective decontamination technique. On the other hand, excavating and dumping the ground soil in special dumping-conditions provides no permanent environmental solution and involves risks associated with the possible vaporization of certain mercury-containing compounds during excavation. An *in situ* immobilization treatment is not either a permanent environmental solution and requires a continuous and precise follow-up of the immobilized contamination.

Extraction processes have been developed to separate mercury from the ground soil, which strongly reduce the amount of mercury contaminant to be dumped. For instance, US Patent No. 5,226,545 discloses a process for removing mercury from mercury contaminated solid materials such as ground waters soil by treating said materials with an aqueous extractant composition comprising an oxidizing agent in an amount sufficient to oxidize elemental mercury to the mercuric oxidation state and a complexing agent in an amount sufficient to form a water-soluble complex with mercuric compounds and separating the aqueous extractant composition from the solid materials, possibly for regeneration and further use. Preferably the oxidizing agent is iodine and the complexing agent is an iodide such as potassium iodide (or alternatively lithium-, sodium-, calcium- and ammonium-iodides) which combines with mercuric iodide to form the water-soluble $K_2HgI_4$. Also preferably, operating temperatures between about 20°C and 65°C are preferred. A solution of iodine in a potassium iodide aqueous solution may be used as the extractant composition, generally in concentrations of up to about 0.5 mole iodine per litre and up to 1 mole potassium iodide per litre. However, when excavating and transportation of the contaminated ground soil remains necessary, many practical, environmental and economical issues about the *ex-situ* extraction process remain unsolved.

On the other hand, *in-situ* remediation is often the most economically attractive technique for removing contaminants from contaminated soils. However the success of any *in-situ* treatment technology critically depends on how the movement of water and desired ions can be engineered in the subsurface. A preferred such remediation technique is electrokinesis, an *in situ* process wherein a direct current is imposed between spaced electrodes implanted in the soil, leading to at least two effects : first ionic species dissolved in the soil-water solution migrate to the oppositely charged electrode (electromigration) at a rate depending on the local potential gradient and on the charge and mobility of the relevant ions; secondly, a flow of soil water is induced toward the cathode (electroosmosis) at a rate depending on the local potential gradient and on the soil zeta potential. Combination of these phenomena leads to a movement of ions towards one of the electrodes and ions may be removed from soils of low hydraulic conductivity, e.g. contaminant ions arriving at the electrodes can be removed by mechanical extraction techniques.

For instance, US Patent No 2,831,804 discloses a process for the electrokinetic *in-situ* treatment (electroreclamation) of agricultural soils in view of their desalinification. Electroreclamation here means the removal of alkali metal ions by means of an electrokinetic technique whereby an electric current is passed via a series of electrodes through the subsoil, thus bringing a combination of electroosmosis (a movement of ground water from the anode to the cathode), electrophoresis (a movement of solid soil particles within a stationary liquid) and electrolysis (a movement of ions and ion complexes in a electrolyte) due to a difference of potential. Problems occurring in such an electro-reclamation technique include corrosion and dissolution of the anode, alkalinization of the medium (soil and ground water) at the cathode and dessication at the anode resulting, after some time, in such a high electrical resistance that the electroosmotic effect is greatly decreased. US Patent No 5,137,608 further discloses an electroosmotic process in soil, comprising a first step of transmitting direct electric current through the soil between an inert anode and a non-rective cathode, a second step of supplying a first liquid comprising water to the soil near said anode and a third step selected from:

- driving a front of low pH (meaning an area in the soil whose pH is sufficiently low to remove a contaminant) through the soil electroosmotically from the vicinity of said anode in the direction towards said cathode until said front reaches soil in the vicinity of said cathode, and
- transmitting alternating electric current through the soil.

Furthermore, European Patent Application EP-A-312,174 discloses a process for electro-reclamation of soil material, comprising bringing a plurality of electrodes into current-conducting connection with the said soil material, bringing a portion of the electrodes into current-conducting connection with the positive or negative pole of a source of direct current voltage, bringing the remaining portion of the electrodes into contact with the other pole of said source of direct current voltage, thereby forming one or more anodes and one or more cathodes and passing an electric current through the soil material between the differently charged electrodes, while controlling the physico-chemical parameters of the medium of both regions adjoining the anode(s) and the cathode(s) in order to maintain or adjust to a desirable composition of the soil material. Such control or conditioning may be achieved for instance by supplying a selected material, e.g. a complexing material, to the anode medium.

C.D.Cox et al., *Environ.Sci.Technolog.* (1996) 30:1933-8 investigated the use of an $I^-/I_2$ lixiviation system for electrokinetic remediation of mercury-contaminated soils. From their findings it results a mercury removal of 74% while most of the mercury remaining in the soil core was found in the pore water, indicating that good solubilization of mercury had been achieved. However higher removal efficiencies, which are dependent upon increasing the rate of transport of solubilized mercury in the soil, could not be obtained by increasing the current because the benefit of enhanced transport of $I_3^-$ (as an oxidising species) and $I^-$ was largely offset by a decrease in the transference number (defined as the fraction of the total current carried by ionic species) of $HgI_4^{2-}$, indicating that this process is inefficient with respect to electric current utilization. A*n in-situ* remediation technique with an $I^-/I_2$ lixiviation agent such as disclosed in US Patent No. 5,226,545 is unlikely to be used in practice because of the high risk of uncontrolled dispersion of the mobilized mercury to deeper soil layers and because of the specific problems encountered by any *in-situ* soil washing or pumping method. Such problems include the need to ensure a complete removal of residual mobilized mercury and lixiviant traces in the soil, resulting in a great amount of low-contaminated waste water that also has to be treated, thus adding to the complexity and cost of the process.

Thus, a number of problems remain to be solved with respect to the recovery of mercury from mercury-contaminated materials by *in-situ* remediation techniques. In general, electro-reclamation technology involves problems when it has to be used for the removal of heavy metals like lead, zinc, cadmium and the like. Prolonged remediation periods are often necessary to ensure a pH-decrease inside the whole soil, strong enough to mobilize the said heavy metals completely from the soil. This is certainly true for soils having high buffer-capacities. Heavy metals are often only partly removable by a pH-decrease, unless the pH decreases to such an extent to end up with a completely destructed soil. A further problem to be addressed is the recycling of the lixiviating system because of the high costs of the latter. Therefore, a first goal of the present invention is to provide a new remediation technique which can get rid of the above-mentioned disadvantages. A second goal of the present invention is to provide an environmentally safe and cost-effective technology for *in situ* recovery of very high proportions of mercury, preferably at least 95% and more preferably substantially all of mercury, from mercury-contaminated materials within a reasonable period of time.

SUMMARY OF THE INVENTION

The present invention first provides a process for recovering mercury from a mercury-contaminated material, comprising a step making use of a lixiviating system comprising iodide, iodate and tri-iodide ions in an effective amount in order to desorb and complex mercury from the said material. In another aspect, the present invention provides a process for recovering mercury from a mercury-contaminated material, comprising a step making use of a lixiviating system in an effective amount in order to desorb and complex mercury from the mercury-contaminated material, wherein the resulting mercury complex is further converted into solvent-extractable mercury iodide. The present invention also provides a process for recovering a heavy metal from a heavy metal-contaminated soil, comprising the steps of:

- providing a cathode compartment inserted into the said heavy metal-contamined soil, the said cathode compartment comprising a cathode surrounded by a cathode solution contained in an ion-permeable housing,
- providing an anode compartment inserted into the said heavy metal -contaminated soil, the said anode compartment comprising an anode surrounded by an anode solution contained in an ion-permeable housing,
- introducing an ionic lixiviating system as a cathode solution into the cathode compartment, the said lixiviating system being in an effective amount in order to desorb and complex the heavy metal from the heavy metal -contaminated soil,

- applying an electric field between the cathode and the anode, thereby causing electrokinetic transport of ions from the ionic lixiviating system from the cathode solution to the anode solution and electrokinetic transport of the resulting heavy metal complex from the heavy metal-contaminated soil to the anode solution,
- isolating the ions from the ionic lixiviating system from the resulting heavy metal complex when they enter the anode solution, and
- recycling the ions from the ionic lixiviating system back from the anode solution to the cathode solution.

The present invention further provides an apparatus for performing the above-mentioned process, i.e. for recovering a heavy metal from a heavy metal-contaminated material, having:

- a cathode compartment comprising a cathode and an ion-permeable housing for containing a cathode solution,
- an anode compartment comprising an anode and an ion-permeable housing for containing an anode solution,
- a cathode recipient for supplying a cathode solution to the cathode,
- an anode recipient for supplying an anode solution to the anode,
- a device for isolating, from the anode solution, a set of ions electrokinetically transported from the cathode solution and a heavy metal complex electrokinetically transported from the heavy metal-contaminated soil, and
- a device for recycling the ions isolated from the anode solution back to the cathode solution.

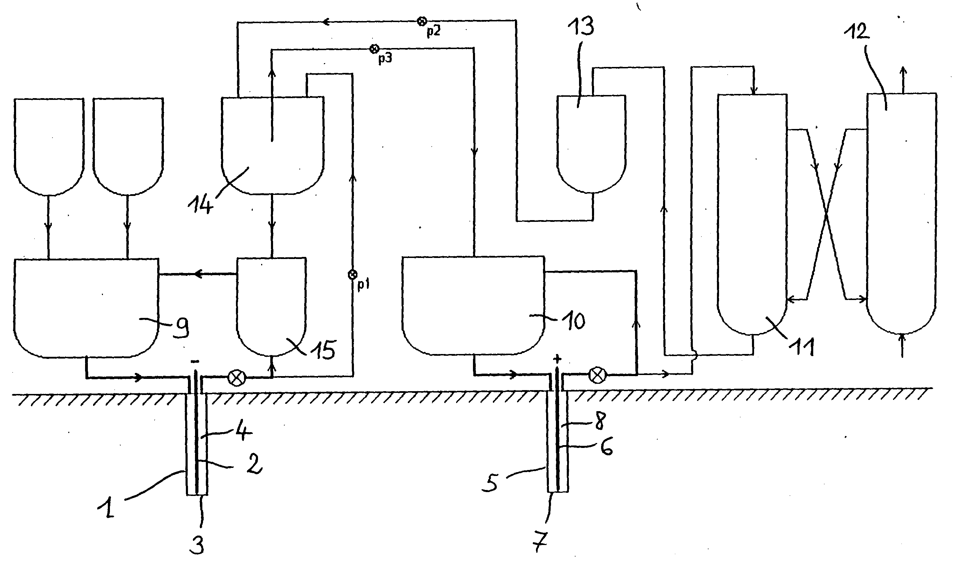

BRIEF DESCRIPTION OF THE DRAWING

The single attached figure shows a flow diagram of an embodiment of a process in accordance with the present invention.

DETAILED DESCRIPTION OF THE INVENTION

The present invention will be described with reference to certain embodiments and a certain drawing but the invention is not limited thereto but only by the claims. In particular the present invention will be described with reference to removal of mercury from contaminated soils but the present invention also includes the removal of heavy metals, expecially mercury, lead and the like, from contaminated particulate matter such as soils, building materials, sand, gravel and industrial wastes.

A first embodiment of the present invention is a process for recovering mercury from a mercury-contaminated material, comprising a step making use of a lixiviating system comprising iodide, iodate and tri-iodide ions in an effective amount in order to desorb and complex mercury from the said material. The present invention is based on the unexpected discovery of the high efficiency of a mixture including at least the latter three iodine-containing ions as a lixiviating system for simultaneously desorbing and complexing mercury and/or mercury-containing compounds of a mercury-contaminated material such as industrial wastes, ground soil, sand, gravel, building materials and the like. The iodide ions which are present in the lixiviating system of this invention may be associated with protons (as HI) or with cations such as ammonium and alcali and alcaline-earth metals, i.e. may be present for instance in the form of potassium, lithium, sodium, calcium and ammonium iodides. The iodate ions and/or tri-iodide ions which are present in the lixiviating system of this invention may be associated with cations such as mentioned herein above. The molar proportions of the three iodine-containing ions in the mixture constituting the lixiviating system are not critical to the present invention and may be suitably selected by those skilled in the art by following the general teachings and principles as stated herein after.

When the mercury-contaminated material is a mercury-contaminated soil, the said lixiviating system may be introduced into the soil and the resulting mercury complex may be extracted electrokinetically from the soil. In the latter case, electrokinetic extraction of the mercury complex from the soil may be achieved by applying an electric field, for instance of about 10 to 200 V/m, between at least two electrodes, namely a cathode and an anode both inserted in the mercury-contaminated soil. Suitable electrode materials for this purpose are carbon, stainless steel, titanium or other non-corrodable materials. Further in this embodiment, each electrode is preferably rinsed with an electrode solution and surrounded by an ion-permeable housing which prevents the electrode solution to flow to deeper soil-layers, the combination of these elements constituting the electrode compartment, i.e. respectively the cathode compartment and the anode compartment. The ion-permeable housing may be made e.g. of ceramic. For instance, the cathode is preferably surrounded by a cathode solution comprising the lixiviating system and possibly further comprising an acidic medium, whereas the anode is surrounded by an anode solution. The purpose of adding an acidic medium to the cathode solution is to control the pH of the said cathode solution in order to compensate for the hydroxyls formed by electrolysis of water at the cathode surface. Examples of a suitable acidic medium which may be present together with the lixiviating system in the cathode solution include hydrochloric acid, nitric acid, sulfuric acid, acetic acid, citric acid and the like. Because the lixiviating system is negatively charged, it will migrate through the cathode housing and through the mercury-contaminated soil towards the anode. On its way through the soil it mobilizes mercury and converts it to negatively charged mercury-iodine strong complexes such as $HgI_3^-$ and $HgI_4^{2-}$, which will also migrate further towards the anode. These mercury-iodine complexes will then enter the anode compartment containing the anode solution, i.e. the anode solution will comprise the mercury complex(es) resulting from electrokinetic extraction from the mercury-contaminated soil.

Without willing to be bound by any theoritical explanation, it is presently believed that the efficiency of the lixiviating system of this invention is at least partly due to the presence of tri-iodide ions which are a suitable means for oxidizing elemental mercury to $Hg^+$ salts such as $HgI_3^-$ and/or $Hg^+$ salts to $Hg^{2+}$ salts such as $HgI_4^{2-}$. For instance, functional groups of organic matter which are often strongly complexed by mercury are also oxidized by tri-iodide ions, thereby liberating $Hg^{2+}$ which will stay in solution in soil pores because it forms very stable complexes such as $HgI_3$ and $HgI_4^{2-}$. Therefore it is important for the efficiency of the process of the invention to ensure that tri-iodide ions remain in their active state, i.e. are not easily reduced to iodide ions at the cathode surface. This may be achieved for example by maintaining a higher pH in the zone close to the cathode surface. The pH in the said zone is at a high level because of the $OH^-$ ions produced by the electrolysis reaction of water, irrespective of the cathodic bulk solution. In such a way, it becomes possible to effect the following disproportionation reaction:

$$3\ I_3^- + 6\ OH^- \rightarrow 8\ I^- + IO_3^- + 3\ H_2O \qquad (1)$$

The iodate ions thus produced can suitably replace the oxidizing function of tri-iodide ions and efficiently mobilize mercury because the electro-migration velocity of iodate ions in the soil exceeds that of tri-iodide ions. Further, when iodate ions arrive in a soil region with a lower pH, the reverse disproportionation reaction:

$$8\ I^- + IO_3^- + 6\ H^+ \rightarrow 3\ I_3^- + 3\ H_2O \qquad (2)$$

takes place, thus making tri-iodide ions again available inside the soil.

Furthermore, $H^+$ ions are produced at the anode surface by the electrolysis of water. These protons enter the soil to form a front of low pH which migrates gradually towards the negatively charged cathode and which is used to complete reaction (2).

In the embodiment of the invention wherein the lixiviating system is introduced into the soil and the resulting mercury complex is extracted electrokinetically from the soil, part of the anode solution containing the mercury-iodine complexes is preferably continuously pumped from the anode compartment back to an anode recipient and another part of the said anode solution is pumped to an extraction unit in order to remove mercury therefrom - as explained in further details hereinafter - in such a way that the mercury concentration in the anode solution is prevented to becom too high. Also after removing mercury, the lixiviating system is preferably removed from the remaining portion of the anode solution - as explained in further details hereinafter - in order to be recycled back to the cathode solution and to be reused in the process of the invention.

According to the present invention, removal of mercury from the anode solution is preferably achieved by converting the mercury-iodine complex(es) present in the anode solution into mercury iodide $HgI_2$ because the latter is easily solvent-extractable. More specifically, it has been found possible to effect such a conversion, i.e. to shift the complexation equilibrium of mercury and iodine towards $HgI_2$, by converting the free iodide ($I^-$) ions into iodic compounds with higher oxidation states (like $IO_3^-$). In turn this conversion may be obtained by controlling some electrochemical reactions - such as detailed hereinafter - taking place at the anode electrode surface, for instance by using a reference electrode in the anode compartment.

Iodide ions are able to oxidize at the anode surface by any of the following reactions:

$$I^- + 3\ H_2O \rightarrow IO_3^- + 6^{\ +} + 6\ e^- \qquad (3)$$

$$I^- + H_2O \rightarrow IO^- + 2\ H^+ + 2\ e^- \qquad (4)$$

Which reactions will mainly occur at the beginning of the remediation process when the first iodide ions enter the anode compartment. From the moment the first iodate $IO_3^-$ and/or $IO^-$ ions are formed, disproportionation reactions are able to take place as soon as new iodide ions enter the anode compartment as follows:

$$5\ I^- + IO_3^- + 6\ H^+ \rightarrow 3\ I_2 + 3\ H_2O \qquad (5)$$

$$I^- + IO^- + 2\ H^+ \rightarrow I_2 + H_2O \qquad (6)$$

protons for this purpose being provided by the electrolysis reaction of water at the anode surface. By means of the above-mentioned reactions, the iodide ionic concentration may be kept very low and therefore $HgI_2$ will by far be the main mercury species present in the anode solution. Finally, iodine formed according to the above-mentioned reactions will further oxidize at the anode surface along with the following equations:

$$\tfrac{1}{2}\ I_2 + 3\ H_2O \rightarrow IO_3^- + 6\ H^+ + 5\ e^- \qquad (7)$$

$$\tfrac{1}{2}\ I_2 + H_2O \rightarrow IO^- + 2\ H^+ + e^- \qquad (8)$$

The result of all these electrochemical reactions is an anode solution mainly consisting of $HgI_2$ and $IO_3^-$ and/or $IO^-$, possibly together with low concentra-

tions of $I_2$. Such a composition of the anode solution has been found to be especially favourable because $HgI_2$ has good hydrophobic properties what makes it suitable for extraction by means of extraction techniques like solvent-extraction.

Therefore a preferred embodiment of the process of the present invention comprises further extraction of mercury iodide $HgI_2$ from the anode solution by means of at least one solvent, for instance in a solvent-extracting device (11) such as represented on the attached single figure. Further preferably, the said extracting solvent should have a boiling point of at least 150°C. Examples of solvents suitable for this purpose include dibutylcarbinol, tri-n-butylphosphate, kerosene and fuel-oil, It should be noted in this respect that a wide range of fewly harmful solvents is available for extracting $HgI_2$ thus contributing to the environmental safety of this process. After extraction, the solvent is preferably recycled by stripping $HgI_2$ from the said solvent, for instance in a solvent-stripping device (12) such as represented on the attached single figure. For instance, a concentrated aqueous potassium iodide or chloride solution may be used as an appropriate stripping solution. In such a way, $HgI_2$ will undergo a phase transfer from the organic phase to the stripping solution, because $HgI_2$ in the stripping solution will immediately convert to mercury-iodine complexes such as $HgI_3^-$ (or $HgCl_3^-$) and $HgI_4^{2-}$ (or $HgCl_4^{2-}$) under the influence of the high $I^-$(or $Cl^-$) concentration. When a potassium iodide stripping solution is used, the mercury-contaminated stripping solution may then be further cleaned and the iodic components be recycled by means of an electrochemical cell, thereby oxidizing the $I^-$ species to form $IO_3^-$. The decreasing concentration of $I^-$ will convert the soluble $HgI_4^{2-}$, species into $HgI_2$. Because the solubility of $HgI_2$ in water is only about 40 ppm, the solution will saturate and a compact precipitate of $HgI_2$ will form.

In another aspect of the present invention, at least part of the lixiviating system electrokinetically transported from the cathode to the anode - and further possibly electrochemically transformed in the anode compartment such as explained above - is preferably recycled from the anode solution back to the cathode solution. Reason for this is that because the lixiviating system migrates through the soil towards the anode, the total lixiviating system concentration of the cathode solution will necessarily decrease. In order to reach and maintain an equilibrium for the process, a dosing system may be provided for continuously adding amounts of the lixiviating system of the present invention to compensate for the decrease in its concentration. After a few days or weeks (depending on the distance between the anode and the cathode, the soil characteristics and the applied voltage), when the first components of the lixiviating system enter the anode solution of the anode compartment, they will preferably be isolated from the mercury compounds and recycled in order to be re-used in the cathode solution. For instance, it is economically advantageous that the concentration of the lixiviating system in the anode solution be controlled, i.e. measured and compared to its concentration in the cathode solution, in order to ensure that the input velocity of the lixiviating system into the soil equals its output velocity towards the anode solution, so that the system may be in equilibrium and very few additional lixiviating system has to be introduced to the cathode solution.

Recycling of the lixiviating system from the anode solution back to the cathode solution may be effected as follows. As previously indicated, after extracting the mercury-containing compounds from the anode solution, the said solution consists mainly of $IO_3^-$ and/or $IO^-$ iodate ions. According to a preferred embodiment, these ions may conveniently be converted into an iodine precipitate, which may further be transferred to and solubilized by the cathode solution. As a result of this procedure, the mass-balance of the solutions stays equilibrated and the iodic compounds can be re-used at the cathode side. This procedure, which may be effected continuously or discontinuously, will now be described by reference to the single attached drawing. The buffer recipient (13) is used to collect the fraction of the anode solution to be treated after extracting at least part, and preferably substantially all, of the mercury-containing compounds. That fraction is then sent, by means of a pump (p2), into a reactor (14) in which iodide and iodate ions are converted into iodine, which forms a precipitate because the latter's solubility (in the absence of iodide ions) is only about 0.001 mole/l. Protons and iodide ions are needed to complete the above-mentioned reaction scheme (5). Because the anode solution is already acidic, only few or even no additional acid is needed, depending on the experimental conditions which determine the amount of protons produced at the anode surface by the electrolysis of water. If needed, additional acid will be introduced into reactor (14) by means of a dosing device (not represented on the attached figure). Iodide ions will be provided to the said reactor by a certain amount of the cathode solution by means of a pump (p1). As already said, the iodide ionic concentration of the cathode solution is kept at a known level. The above-mentioned conversion reaction is preferably effected and monitored in such a way that no iodide ions stay in solution after iodate ions $IO_3^-$ were reacted in reactor (14). This can be obtained, for instance, by ensuring a slightly stoechimetrical excess of $IO_3^-$ iodate ions in the reactor. Because the amount of cathode solution added to the reactor and its iodide ionic concentration are kept constant and because the variations in the iodate concentration of the anode solution are only minor, once the system has found its equilibrium, the amount of anode solution to be added can easily be predicted. The smaller the excess of $IO_3^-$ ions, the better is the efficiency of the lixiviating system transfer back to the cathode. After filling reactor (14) with the anode and cathode solutions and after the above-mentioned reaction has been completed, a short time is taken to allow the iodine precipitate to settle down, then a certain amount of the supernatant solution is pumped by means of pump (p3) back to the anode recipient (10). This amount should be approximately equal to the amount of the anode solution previously added into reactor (14). Then the rest of the solution present in reactor (14), including the iodine precipitate, is sent back to the cathode recipient (9).

According to a preferred embodiment of the invention, iodine precipitate is further solubilized before being admixed with the other components of the lixiviating system. This may be achieved for instance in a recipient (15) by means of a reaction with part of the iodide ions present in the cathode solution of the cathode compartment in such a way as to form the tri-iodide ions $I_3^-$. Part of the said tri-iodide ions $I_3^-$ will further reduce to $I^-$ at the cathode surface.

As can be readily understood from the above description, the present invention also relates to a process for recovering mercury from a mercury-contaminated material,

comprising a step making use of a lixiviating system in an effective amount in order to desorb and complex mercury from the mercury-contaminated material, wherein the resulting mercury complex is further converted into solvent-extractable mercury iodide. Within the framework of such a process, a preferred lixiviating system comprises iodide, iodate and tri-iodide ions.

The concepts on which the above invention is based, such as disclosed hereinabove with respect to the decontamination of mercury, are also applicable by principle to the decontamination of other heavy metals such as, for instance, lead , cadmium and the like.

Another aspect of the present invention relates to an apparatus specifically designed for carrying out either embodiment of the above-described processes for recovering mercury from a mercury-contaminated material. This apparatus will now be described by reference to the attached single figure. Preferably, the said apparatus thus comprises at least:

- a cathode compartment (1) comprising a cathode (2) and an ion-permeable housing (3) for containing a cathode solution (4),
- an anode compartment (5) comprising an anode (6) and an ion-permeable housing (7) for containing an anode solution (8),
- a cathode recipient (9) for supplying the cathode solution to the cathode compartment (1),
- an anode recipient (10) for supplying the anode solution to the anode compartment (5),
- a device for isolating, from the anode solution, a set of ions electrokinetically transported from the cathode solution and a heavy metal complex electrokinetically transported from the heavy metal-contaminated soil, and
- a device for recycling the ions isolated from the anode solution back to the cathode solution.

When the heavy metal-contaminated material is a heavy-metal contaminated soil, such as a mercury contaminated soil, it is preferred that the cathode (2) and the anode (6) are both insertable in the said heavy-metal contaminated soil.

Therefore the present invention more broadly relates to a process for recovering a heavy metal from a heavy metal-contaminated soil, comprising the steps of:

- providing a cathode compartment inserted into the said heavy metal -contaminated soil, the said cathode compartment comprising a cathode surrounded by a cathode solution contained in an ion-permeable housing,
- providing an anode compartment inserted into the said heavy metal -contaminated soil, the said anode compartment comprising an anode surrounded by an anode solution contained in an ion-permeable housing,
- introducing an ionic lixiviating system as a cathode solution into the cathode compartment, the said lixiviating system being in an effective amount in order to desorb and complex the heavy metal from the heavy metal -contaminated soil,
- applying an electric field between the cathode and the anode, thereby causing electrokinetic transport of ions from the ionic lixiviating system from the cathode solution to the anode solution and electrokinetic transport of the resulting heavy metal complex from the heavy metal-contaminated soil to the anode solution,
- isolating the ions from the ionic lixiviating system from the resulting heavy metal complex when they enter the anode solution, and
- recycling the ions from the ionic lixiviating system back from the anode solution to the cathode solution.

A preferred embodiment of such a process includes converting the resulting heavy-metal complex into a solvent-extractable heavy-metal compound while isolating the ions from the ionic lixiviating system therefrom. Specifically, the heavy metal is mercury and the solvent-extractable heavy-metal compound is mercury iodide $HgI_2$. More specifically, the ionic lixiviating system comprises iodide, iodate and tri-iodide ions and conversion of the mercury complex into mercury iodide $HgI_2$ is achieved by converting iodide ions into iodate ions.

The process according to the present invention provides several advantages compared to the previously known *in-situ* technologies. First, the electro-reclamation process of the invention is not limited to certain types of mercury-contaminated materials such as homogeneous and sandy soils. Secondly, the environmental risks of an uncontrolled dispersion, i.e. substantially vertical migrations mainly induced by diffusion processes, of the mercury-containing pollutants during the electrokinetic treatment are minimized because electro-reclamation can be executed in unsaturated soils and because no hydraulic flows are needed. Thirdly, the conventional disadvantages of electro-reclamation technologies applied to the removal of heavy metals, such as above stated, are of less importance in the instant process because a strong pH-decrease is not necessary to mobilize practically all of the mercury from the soil when a lixiviating system comprising iodide ($I^-$), iodate ($IO_3^-$) and tri-iodide ($I_3^-$) ions is used. As a consequence, the process of this invention results in a mercury removal from a mercury-contaminated soil as high as about 97% within a reasonable period of time, i.e. within about 5 to 50 weeks depending on the soil characteristics, the contaminant concentration, the applied voltage and the distance between the anode and the cathode.

By introducing a 'second step electro-reclamation' after most of the mercury present was removed, it becomes possible to remove the lixiviating system from the soil. This 'second step' involves an electro-reclamation process of the same kind as the above discussed process, wherein the input of lixiviating system at the cathode is being stopped. Because the migration of the lixiviating system through the soil towards the anode will continue and because no more lixiviating system will enter the soil at the cathode, the lixiviating system concentration will be beneath detection limit after the second step electro-reclamation was continued for about 1 to 15 weeks. Another of second step electro-reclamation is a further decrease of the residual mercury concentration in the soil to less than 0.001 ppm.

**Claims**

1. A process for recovering mercury from a mercury-contaminated material, comprising a step making use of a lixiviating system comprising iodide, iodate and tri-iodide ions in an effective amount in order to desorb and complex mercury from the said material.

2. A process according to claim 1, wherein the mercury-contaminated material is a mercury-contaminated soil and wherein the lixiviating system is introduced into the soil and the resulting mercury complex is extracted electrokinetically from the soil.

3. A process according to claim 2, wherein electrokinetic extraction of the mercury complex from the soil is achieved by applying an electric field between a cathode and an anode both inserted in the mercury-contaminated soil.

4. A process according to claim 3, wherein the cathode is surrounded by a cathode solution comprising the lixiviating system.

5. A process according to claim 4, wherein the cathode solution further comprises an acidic medium.

6. A process according to any of claims 3 to 5, wherein the anode is surrounded by an anode solution comprising the mercury complex.

7. A process according to any of claims 2 to 6, wherein the mercury complex is further converted at the anode into mercury iodide $HgI_2$ by an electrolytic oxidation reaction.

8. A process according to claim 7, wherein conversion of the mercury complex into mercury iodide $HgI_2$ is achieved by converting iodide ions into iodate ions.

9. A process according to claim 7 or claim 8, wherein mercury iodide $HgI_2$ is further extracted from the anode solution by means of at least one solvent.

10. A process according to claim 9, wherein the said extracting solvent has a boiling point of at least 150°C and/or is e.g. selected from dibutylcarbinol, tri -n-butylphosphate, kerosene and fuel-oil.

11. A process according to any of claims 4 to 10, wherein at least part of the lixiviating system electrokinetically transported from the cathode to the anode is recycled from the anode solution.

12. A process according to claim 11, wherein that part of the lixiviating system recycled from the anode solution is further chemically transformed into an iodine precipitate.

13. A process according to claim 12, wherein the said iodine precipitate is further solubilized before being admixed with the other components of the lixiviating system.

14. A process according to any of claims 9 to 10, wherein the extracting solvent is further recycled by stripping mercury iodide $HgI_2$ therefrom, e.g. by means of a concentrated aqueous potassium iodide or chloride stripping solution.

15. A process according to any of claims 3 to 14, wherein the concentration of the lixiviating system in the anode solution is controlled in order to ensure that the input velocity of the lixiviating system into the soil equals its ouput velocity towards the anode solution.

16. A process for recovering mercury from a mercury-contaminated material, comprising a step making use of a lixiviating system in an effective amount in order to desorb and complex mercury from the mercury-contaminated material, wherein the resulting mercury complex is further converted into solvent-extractable mercury iodide.

17. A process according to claim 16, wherein the lixiviating system comprises iodide, iodate and tri-iodide ions.

18. An apparatus for recovering a heavy metal from a heavy metal -contaminated material, having:

- a cathode compartment comprising a cathode and an ion-permeable housing for containing a cathode solution,
- an anode compartment comprising an anode and an ion-permeable housing for containing an anode solution,
- a cathode recipient for supplying the cathode solution to the cathode compartment,
- an anode recipient for supplying the anode solution to the anode compartment,
- a device for isolating, from the anode solution, a set of ions electrokinetically transported from the cathode solution and a heavy metal complex electrokinetically transported from the heavy metal-contaminated soil, and
- a device for recycling the ions isolated from the anode solution back to the cathode solution.

19. A process for recovering a heavy metal from a heavy metal-contaminated soil, comprising the steps of:

- providing a cathode compartment inserted into the said heavy metal -contaminated soil, the said cathode compartment comprising a cathode surrounded by a cathode solution contained in an ion-permeable housing,
- providing an anode compartment inserted into the said heavy metal -contaminated soil, the said anode compartment comprising an anode surrounded by an anode solution contained in an ion-permeable housing,
- introducing an ionic lixiviating system as a cathode solution into the cathode compartment, the said lixiviating system being in an effective amount in order to desorb and complex the heavy metal from the heavy metal-contaminated soil,
- applying an electric field between the cathode and the anode, thereby causing electrokinetic transport of ions from the ionic lixiviating system from the cathode solution to the anode solution and electrokinetic transport of the resulting heavy metal complex from the heavy metal-contaminated soil to the anode solution,
- isolating the ions from the ionic lixiviating system from the resulting heavy metal complex when they enter the anode solution, and
- recycling the ions from the ionic lixiviating system back from the anode solution to the cathode solution.

20. A process for recovering a heavy metal from a heavy-metal contaminated soil according to claim 19, comprising converting the resulting heavy-metal complex into a solvent-extractable heavy-metal compound while isolating the ions from the ionic lixiviating system therefrom.

21. A process for recovering a heavy metal from a heavy-metal contaminated soil according to claim 20, wherein the heavy metal is mercury and the solvent-extractable heavy-metal compound is mercury iodide $HgI_2$, and wherein the ionic lixiviating system comprises iodide, iodate and tri-iodide ions and conversion of the mercury complex into mercury iodide $HgI_2$ is achieved by converting iodide ions into iodate ions.

**European Patent Office**

# EUROPEAN SEARCH REPORT

Application Number

EP 00 20 1279

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | COX C D ET AL: "ELECTROKINETIC REMEDIATION OF MERCURY-CONTAMINATED SOILS USING IODINE/IODIDE LIXIVIANT" ENVIRONMENTAL SCIENCE AND TECHNOLOGY,US,AMERICAN CHEMICAL SOCIETY. EASTON, PA, vol. 30, no. 6, 1 June 1996 (1996-06-01), pages 1933-1938, XP000595281 ISSN: 0013-936X * page 1993, left-hand column, line 1 - line 22 * * page 1993, right-hand column, line 19 - page 1935, left-hand column, line 17 * * figure 2 * | 1-6,18, 19 | B09C1/08 B09C1/02 C22B43/00 A62D3/00 |
| A,D | US 5 226 545 A (D. FOUST) 13 July 1993 (1993-07-13) * column 2, line 21 - column 5, line 27 * * figure 1 * | 1,18,19 | |
| A | US 3 760 057 A (I. KRESSIN) 18 September 1973 (1973-09-18) * claim 1 * | 16 | **TECHNICAL FIELDS SEARCHED** (Int.Cl.7) |
| A,D | EP 0 312 174 A (HYDRACONSULT) 19 April 1989 (1989-04-19) * claims 1-6 * * figure 3 * | 18,19 | B09C C22B C02F A62D |
| A | US 5 865 964 A (R. CLARKE) 2 February 1999 (1999-02-02) | | |

The present search report has been drawn up for all claims

| Place of search | Date of completion of the search | Examiner |
|---|---|---|
| THE HAGUE | 15 January 2001 | Laval, J |

EPO FORM 1503 03.82 (P04C01)

## ANNEX TO THE EUROPEAN SEARCH REPORT
## ON EUROPEAN PATENT APPLICATION NO.

EP 00 20 1279

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2001

| Patent document cited in search report | | Publication date | Patent family member(s) | | Publication date |
|---|---|---|---|---|---|
| US 5226545 | A | 13-07-1993 | CA | 2126079 A | 28-04-1994 |
| | | | DE | 69325891 D | 09-09-1999 |
| | | | DE | 69325891 T | 16-03-2000 |
| | | | EP | 0617740 A | 05-10-1994 |
| | | | WO | 9409167 A | 28-04-1994 |
| US 3760057 | A | 18-09-1973 | NONE | | |
| EP 312174 | A | 19-04-1989 | NL | 8702437 A | 01-05-1989 |
| | | | AT | 75637 T | 15-05-1992 |
| | | | CA | 1338863 A | 21-01-1997 |
| | | | DE | 3870797 A | 11-06-1992 |
| | | | ES | 2031583 T | 16-12-1992 |
| | | | GR | 3004510 T | 28-04-1993 |
| | | | US | 5433829 A | 18-07-1995 |
| | | | US | 5589056 A | 31-12-1996 |
| US 5865964 | A | 02-02-1999 | WO | 9627033 A | 06-09-1996 |

EPO FORM P0459

For more details about this annex : see Official Journal of the European Patent Office, No. 12/82